# EUROPÄISCHE PATENTSCHRIFT

(11) **EP 3 620 773 B1**
(45) Veröffentlichungstag und Bekanntmachung des Hinweises auf die Patenterteilung: **14.12.2022**
(21) Anmeldenummer: 18192845.8
(22) Anmeldetag: 06.09.2018
(51) Int. Cl.: G01N 1/36, G01N 1/30, G02B 21/34, G01N 1/28

(54) **VERFAHREN ZUR FIXIERUNG EINES DÜNNFILMMATERIALS AUF EINEM TRÄGERGLAS**
METHOD FOR FIXING A THIN FILM MATERIAL ON A CARRIER PANE
PROCÉDÉ DE FIXATION D'UN MATÉRIAU À COUCHE MINCE SUR UN VERRE SUPPORT

(43) Veröffentlichungstag der Anmeldung: 11.03.2020
(73) Patentinhaber: Siemens Healthcare Diagnostics Inc., Tarrytown, NY 10591 (US)
(72) Erfinder: Engel, Thomas, 73432 Aalen (DE); Hörnig, Gabriele, 90766 Fürth (DE); Marquardt, Gaby, 91353 Hausen (DE); Seidel, Daniela, 91083 Baiersdorf (DE)
(74) Vertreter: Castorph, Simon Johannes

(56) Entgegenhaltungen:
- CN-U- 201 444 213
- US-A- 3 551 023
- US-A- 4 597 982

## Beschreibung

Die Erfindung liegt auf dem Gebiet der automatischen Analyzer und betrifft ein Verfahren für einen Hämatologie-Analyzer zum Analysieren von Zellen in einer Probe unter Verwendung einer Mikroskopiervorrichtung.

Zur automatisierten Analyse von Zellen werden so genannte "automated cell counters" (Automatisierte Zellzählgeräte) mit zunehmendem Erfolg angewendet. Beispiele hierfür sind die Advia 2120, Sysmex XE-2100 sowie Cobas m 511 Systeme. Diese automatisierten Geräte stellen, abgesehen von ihrer hohen Durchsatzzahl, einige Vorteile bereit, wie beispielsweise hohe Objektivität (keine Variabilität abhängig vom Beobachter), Elimination statistischer Variationen, die üblicherweise mit einer manuellen Zählung verbunden sind (Zählung hoher Zellzahlen), sowie die Bestimmung zahlreicher Parameter, die bei einer manuellen Auszählung nicht verfügbar wären und, wie angesprochen eine effizientere und kosteneffektivere Handhabung. Einige dieser Geräte können 120 bis 150 Patientenproben pro Stunde bearbeiten.

Die technischen Prinzipien der automatischen Einzelzellzählung wie z.B. in den Advia 2120 und Sysmex XE-2100 Geräten beruhen meist entweder auf einer Impedanz- (Widerstands-) Messung oder auf einem optischen System (Streulicht- bzw. Absorptionsmessung). Weiter sind bildgebende Systeme etabliert, die z.B. Zellen eines Blutausstrichs automatisiert abbilden und bewerten, wie z.B. in den Cobas m 511, CellaVision DM96 und CellaVision 1200 Geräten.

Beim Impedanzverfahren erfolgt die Zellzählung sowie deren Größenbestimmung auf Grundlage des Nachweises und der Messung von Veränderungen in der elektrischen Leitfähigkeit (Widerstand), die durch ein Teilchen verursacht werden, das sich durch eine kleine Öffnung hindurchbewegt. Teilchen, wie beispielsweise Blutzellen, sind selbst nicht leitend, werden jedoch in einem elektrisch leitenden Verdünnungsmittel suspendiert. Wenn eine derartige Suspension von Zellen durch eine Öffnung hindurchgeleitet wird, nimmt bei Durchgang einer einzelnen individuellen Zelle die Impedanz (Widerstand) des elektrischen Weges zwischen den beiden Elektroden, die sich auf jeder Seite der Öffnung befinden, vorübergehend zu.

Im Gegensatz zum Impedanzverfahren umfasst das optische Verfahren das Durchleiten eines Laserlichtstrahles oder eines LED Lichtstrahls durch eine verdünnte Blutprobe, die in einem kontinuierlichen Strom von dem Laserstrahl oder dem LED Lichtstrahl erfasst wird. Der entsprechende Lichtstrahl kann dabei z.B. mittels eines Lichtwellenleiters zur Durchflusszelle geleitet werden. Jede Zelle, die durch die Erfassungszone der Durchflusszelle hindurchtritt, streut das fokussierte Licht. Das gestreute Licht wird dann durch einen Fotodetektor nachgewiesen und in einen elektrischen Impuls umgewandelt. Die hier erzeugte Anzahl von Impulsen ist direkt zur Zellanzahl proportional, die durch die Erfassungszone in einer speziellen Zeitspanne hindurchtritt.

Bei den optischen Verfahren wird die Lichtstreuung der einzelnen Zelle, die durch die Erfassungszone hindurchtritt, in verschiedenen Winkeln gemessen. Hierdurch wird das Streuverhalten der jeweiligen Zelle für die optische Strahlung erfasst, das Rückschlüsse auf z.B. die Zellstruktur, Form und Reflexionsvermögen erlaubt. Dieses Streuverhalten kann dazu verwendet werden, verschiedene Arten von Blutzellen zu differenzieren und die abgeleiteten Parameter zur Diagnose von Abweichungen der Blutzellen dieser Probe von einer Norm, die z.B. aus einer Vielzahl von als normal klassifizierten Referenzproben gewonnen wurde, zu verwenden.

Für die Anfertigung von Blutausstrichen zur Differenzialdiagnostik wird bisher üblicherweise eine Blutprobe auf einem Glasobjektträger ausgestrichen und manuell oder automatisiert mikroskopisch ausgewertet. Glasobjektträger verursachen hohe Kosten in der Herstellung. Weiter ist Glas sehr zerbrechlich und es kann beim Zerbrechen zur Entstehung scharfer Kanten kommen, was zu einem erhöhten Verletzungsrisiko des Laborpersonals führt. Gerade im Labor sind Schnittverletzungen besonders gefährlich, weil dadurch die natürliche Barriere Schicht der Haut beschädigt wird und ein Eindringen von Pathogenen möglich wird. Dadurch steigt das Risiko einer Infektion mit Krankheitserregern deutlich an.

Glasobjektträger lassen sich durch Dünnfilmmaterialien wie z.B. Folien als Trägermaterial für die Ausbringung von Blut und dessen Mikroskopie ersetzen. Die Verwendung eines Dünnfilmmaterials wie z.B. einer Folie als Trägermaterial für die Ausbringung von Blut und dessen Mikroskopie bringt jedoch das Problem mit sich, dass Folie im Vergleich zu Glas sehr flexible und biegsam ist und dadurch bedingt keine hohe Planarität aufweist. Für die Mikroskopie ist jedoch eine hohe Planarität erforderlich, um eine gute Aufnahmen der Zellen zu ermöglichen. Insbesondere in der automatisierten Mikroskopie ist eine hohe Planarität auch für die exakte Ausrichtung der Probe wichtig um qualitativ hochwertige Bilder zu erhalten.

US 4 597 982 A offenbart ein Verfahren zur Fixierung eines Dünnfilmmaterials auf einer planen Oberfläche eines Trägerglases für eine Mikroskopiervorrichtung mittels einer Flüssigkeit, das Verfahren umfassend die folgenden Schritte:
- Aufbringen einer Flüssigkeitsmenge auf die plane Oberfläche des Trägerglases,
- Aufbringen des Dünnfilmmaterials auf die wenigstens teilweise, bevorzugt vollständig mit Flüssigkeit benetzten Oberfläche des Trägerglases.

US 4 597 982 A offenbart als Flüssigkeit Alkohol, Mikroskopier-Öl oder flüssigen Kleber.

US 3 551 023 A offenbart dass ein Dünnfilmmaterial mit einem flüssigen Klebstoff an der oberen Oberfläche eines Trägerglases geklebt wird. Dann ist eine mikroskopisch zu untersuchende Probe auf die der geklebte Oberfläche des Trägerglases abgewandten Oberfläche des Dünnfilmmaterials aufgebracht.

Eine der Erfindung zugrundeliegende Aufgabe ist daher das Bereitstellen einer Vorrichtung und eines Verfahrens, mittels dem eine Planarisierung des Dünnfilmmaterials erreicht werden kann. Da heutige hochauflösende Mikroskope für die automatisierte Bewertung von Zellen in Blutausstrichen mit hoher numerischer Apertur arbeiten und damit mit Immersion zwischen Objektträger und Objektive und gegebenenfalls auch zwischen Objektträger und Kondensor, ist die Einschubdicke eines Folienobjektträgers inklusive einer Vorrichtung zur Planarisierung auf eine Dicke von etwa 1.4 mm begrenzt. Somit steht einer Vorrichtung und einem Verfahren, mittels dem eine Planarisierung des Dünnfilmmaterials erfolgt, nur ein sehr begrenzter Raum hinsichtlich dieser Einschubdicke zur Verfügung.

Die Aufgabe wird von einem erfindungsgemäßen Verfahren, einer entsprechenden Verwendung eines Verfahrens sowie eines Analyzers gemäß der unabhängigen Patentansprüche gelöst. Vorteilhafte Weiterbildungen der Erfindung sind insbesondere auch durch die Unteransprüche gegeben.

Die Erfindung geht von der Idee aus, Dünnfilmmaterial mit Hilfe einer geringen Menge Wasser auf einem transparenten Träger mit guten optischen Eigenschaften und einer hohen Planarität temporär zu fixieren. Für die Ausbringung von Blut auf dem Dünnfilmmaterial ist es zudem wichtig, dass die entsprechende Oberfläche, auf die das Blut aufgebracht werden soll, eine hydrophile Oberfläche ist.

Der Gegenstand der Erfindung umfasst insbesondere ein Verfahren nach Anspruch 1.

Das erfindungsgemäße Verfahren hat den Vorteil, dass eine Planarisierung des Dünnfilmmaterials mit besonders einfachen Mitteln zuverlässig erreicht werden kann. Durch die damit mögliche Verwendung von Dünnfilmmaterial wie z.B. Folie lassen sich die Kosten für die Anfertigung eines Blutausstriches deutlich reduzieren. Ein Folienobjektträger ist in der Herstellung wesentlich günstiger als ein Glasobjektträger. Weiter ist ein Folienobjektträger bis zu 10-fach dünner als Glas. Dadurch ist es möglich eine Kassette mit Objektträgern herzustellen, die bei gleicher Größe, bis zu 10-mal mehr Objektträger beinhaltet, wodurch mehr Objektträger gleichzeitig in ein entsprechendes Gerät geladen werden können. Weiter wird bei der Verwendung von Folienobjektträgern weniger Abfall produziert als bei der Verwendung von Glasobjektträgern. Darüber hinaus ist ein Dünnfilmmaterial wie z.B. eine Folie im Vergleich zu Glas nicht zerbrechlich wodurch das Risiko einer Verletzung durch scharfe Kanten deutlich reduziert wird.

Bei dem Trägerglas handelt es sich bevorzugt um einen Objektträger, der im Gegensatz zu herkömmlichen Objektträgern aus bruchsichererem Glas besteht. Bevorzugt weist das Trägerglas eine hohe Kantengüte und/oder eine hohe Stabilität auf. Eine hohe Kantengüte kann die Stabilität des Glases erhöhen. Eine hohe Stabilität des Trägerglases ist insbesondere vorteilhaft für die mehrfache Benutzung, beziehungsweise die wiederholte Verwendung in einem automatischen Analyzer.

Besonders bevorzugt besteht das Trägerglas aus einem Corning Gorilla^{™} Glas von Corning Incorporated und/oder einem chemisch verstärktem Aluminosilicatglas wie z.B. Xensation^{™} Cover von SCHOTT Technical Glass Solutions GmbH.

In einer vorteilhaften Ausgestaltung des erfindungsgemäßen Verfahrens besteht das Trägerglas aus Kunststoff.

In einer vorteilhaften Ausgestaltung des erfindungsgemäßen Verfahrens weist das Verfahren weiter den folgenden Schritt auf: Mikroskopie der auf der Oberfläche des Dünnfilmmaterials aufgebrachten Probe. Dies hat den Vorteil, dass ein entsprechendes Bild der mikroskopischen Struktur der Probe erhalten wird.

In einer vorteilhaften Ausgestaltung des erfindungsgemäßen Verfahrens weist das Verfahren weiter die folgenden Schritte auf: Entfernen des Dünnfilmmaterials mit der aufgebrachten Probe von dem Trägerglas, Reinigung und Trocknung der mit Flüssigkeit benetzten Oberfläche des Trägerglases, Wiederverwendung des Trägerglases. Bevorzugt erfolgt die Reinigung dabei mit Luft. Dies hat den Vorteil, dass das Trägerglas wiederverwendet werden kann. Dies kann zu erheblichen Kostenvorteilen führen und vermeidet darüber hinaus unnötige Umweltverschmutzungen und reduziert den Gesamtenergiebedarf.

In einer weiteren vorteilhaften Ausgestaltung des erfindungsgemäßen Verfahrens beträgt die Gesamtdicke des Trägerglases mit aufgebrachter Flüssigkeit, Dünnfilmmaterial und Probe weniger als 1,4 mm, wobei die Gesamtdicke des Trägerglases mit aufgebrachter Flüssigkeit und Dünnfilmmaterial ohne Probe besonders bevorzugt 1 mm beträgt. Dies hat den Vorteil, dass eine Verwendung des Verfahrens in einem hochauflösenden Mikroskop für die automatisierte Bewertung von Zellen in Blutausstrichen mit hoher numerischer Apertur und mit Immersion zwischen Objektträger und Objektive und gegebenenfalls auch zwischen Objektträger und Kondensor geeignet ist, da die Gesamtdicke kleiner oder gleich der maximalen möglichen Einschubdicke von 1,4 mm ist.

In einer weiteren vorteilhaften Ausgestaltung des erfindungsgemäßen Verfahrens ist das Dünnfilmmaterial eine biegsame Folie.

Die Flüssigkeit besteht aus Wasser. Dies hat den Vorteil, dass die Fixierung mit Wasser es ermöglicht auf einfache und kostengünstige Weise Dünnfilmmaterial, wie z.B. Folie, für die Hochdurchsatzmikroskopie zu verwenden. Die Fixierung der Folie mit Wasser bringt weiter den Vorteil mit sich, dass sich die Folie nach der Mikroskopie wieder vom Träger ablösen lässt. Die Zusammensetzung des Wassers ermöglicht eine rückstandsloses ablösen der Folie vom Träger und dadurch eine besonders einfache Wiederverwendung des Trägers. Die mikroskopierte und wieder vom Träger abgelöste Folie wird anschließend entsorgt. Der Träger wird mit z.B. Luft im System gereinigt und kann anschließend wiederverwendet werden. Die geringe Viskosität von Wasser erlaubt dabei eine gleichmäßige Verteilung des Wassers zwischen dem Dünnfilmmaterial und dem Träger. Wasser bildet dabei aufgrund seiner geringen Viskosität einen sehr gleichmäßigen dünnen Film zwischen dem Träger und dem Dünnfilmmaterial und bindet so das Dünnfilmmaterial temporär an den Träger. Dadurch wird bei der Folie eine ähnlich hohe Planarität erzeugt wie beim Träger. Des Weiteren wird durch die Verwendung von Wasser der Einfluss der Fixierung auf die optischen Eigenschaften sehr gering gehalten bzw. es kommt vorteilshafterweise zu keiner Veränderung der optischen Eigenschaften durch die Fixierung. Nach Beendigung des Mikroskopiervorgangs lässt sich das Dünnfilmmaterial wieder vom Träger ablösen. Zur Wiederverwendung des Trägers muss dieser dann vorzugsweise nur noch getrocknet werden und kann anschließend wiederverwendet werden. Die Zusammensetzung des Wassers ermöglicht dabei ein Rückstandsloses ablösen des Dünnfilmmaterials vom Träger.

In einer weiteren vorteilhaften Ausgestaltung des erfindungsgemäßen Verfahrens beträgt die auf die plane Oberfläche des Trägerglases aufgebrachte Flüssigkeitsmenge 3.7 bis 11 Nano Liter pro mm², bevorzugt 4.8 bis 9.6 Nano Liter pro mm², besonders bevorzugt 5.3 Nano Liter pro mm².

In einer weiteren vorteilhaften Ausgestaltung des erfindungsgemäßen Verfahrens ist das Trägerglas im sichtbaren Spektralbereich transparent.

In einer weiteren vorteilhaften Ausgestaltung des erfindungsgemäßen Verfahrens wird das Dünnfilmmaterial mit einem zweiten Dünnfilmmaterial, z.B. einer zweiten Folie, abgedeckt, wobei die Dicke des zweiten Dünnfilmmaterials bzw. der zweiten Folie bevorzugt 0.1 bis 0.17 mm beträgt. Dies hat den Vorteil, dass die zweite Folie als Deckglas dient. In der Hämatologie verwendet man in der Regel keine Deckgläser, es gibt jedoch andere Anwendungen bei denen eine Verwendung von eingedeckelten Proben vorteilhaft ist. Häufig ist es auch aufgrund der technischen Gegebenheiten des verwendeten Mikroskops nicht möglich eine uneingedeckelte Probe zu mikroskopieren.

In einer weiteren vorteilhaften Ausgestaltung des erfindungsgemäßen Verfahrens umfasst die Probe eine menschliche und/oder tierische Körperflüssigkeit, bevorzugt Blut. Bevorzugt enthält die Probe Blutzellen.

Ein weiterer Gegenstand der Erfindung ist ein automatischer Analyzer nach Anspruch 13.

Bevorzugt handelt es sich bei dem erfindungsgemäßen Analysator um einen automatischen Analysator, besonders bevorzugt um einen teilautomatischen oder vollautomatischen Hämatologie-Analysator. Bevorzugt umfasst das Mikroskop eine oder mehrere Kameras. Bevorzugt umfasst die Kamera ein digitales Aufzeichnungsgerät, das zum Aufnehmen des im Mikroskop abgebildeten Lichtfelds ausgebildet ist. Bevorzugt Umfasst das digitale Aufzeichnungsgerät einen charge-coupled device (CCD) Chip oder mehrere CCD Chips. Besonders bevorzugt basiert das digitale Aufzeichnungsgerät auf einer Complementary Metal-Oxide-Semiconductor (CMOS) Technik und/oder umfasst einen CMOS Chip.

Die Erfindung basiert auf einem optischen Mikroskop, das beispielweise mit Vorrichtungen für Differential Interferenzkontrast ausgestattet ist. Solche Mikroskope können dabei in Bezug auf die Aufspaltung auf die Anforderungen der Hämatologie angepasst werden. Diese Anpassung erfolgt im Wesentlichen durch eine gezielte Wahl des Strahlversatzes auf dem Strahlweg durch das Messobjekt. Bei dem Messobjekt handelt es sich beispielsweise um eine ausgestrichene Blutprobe.

Die Erfindung wird anhand der beigefügten Zeichnung noch einmal durch ein konkretes Ausführungsbeispiel näher erläutert. Das gezeigte Beispiel stellt eine bevorzugte Ausführungsform der Erfindung dar. Es zeigt:
- FIG 1: eine schematische Darstellung des Ablaufs eines Verfahrens zur Fixierung eines Dünnfilmmaterials auf einer planen Oberfläche eines Trägerglases,
- FIG 2: einen automatischen Analyzer umfassend Mittel zur automatischen Ausführung eines Verfahrens zur Fixierung eines Dünnfilmmaterials auf einer planen Oberfläche eines Trägerglases.

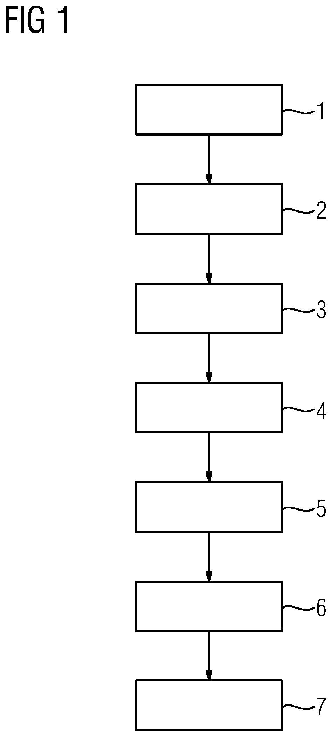

Das in FIG 1 schematisch dargestellte Verfahren dient der Fixierung eines Dünnfilmmaterials auf einer planen Oberfläche eines Trägerglases für eine Mikroskopiervorrichtung mittels einer Flüssigkeit. Das Verfahren umfassend die folgenden Schritte. Zunächst wird eine Flüssigkeitsmenge auf die plane Oberfläche des Trägerglases aufgebracht (1). Weiter wird das Dünnfilmmaterial auf die teilweise oder vollständig mit Flüssigkeit benetzte Oberfläche des Trägerglases aufgebracht (2). Weiter wird eine mikroskopisch zu untersuchende Probe auf die der mit Flüssigkeit benetzten Oberfläche des Trägerglases (16) abgewandten Oberfläche des Dünnfilmmaterials aufgebracht. Hierbei ist die der mit Flüssigkeit benetzten Oberfläche des Trägerglases (16) abgewandte Oberfläche des Dünnfilmmaterials (18) hydrophil. Weiter wird die auf der Oberfläche des Dünnfilmmaterials (18) aufgebrachte Probe mikroskopiert durch Aufnahme von mindestens einem mikroskopischen Bild der Probe. Anschließend wird das Dünnfilmmaterial (18) mit der aufgebrachten Probe von dem Trägerglas (16) entfernt und die mit Flüssigkeit benetzte Oberfläche des Trägerglases (16) gereinigt und getrocknet, wobei die Trocknung bevorzugt mit Luft erfolgt. Anschließend wird das Trägerglas (16) wiederverwendet in einem weiteren Durchlauf des Verfahrens.

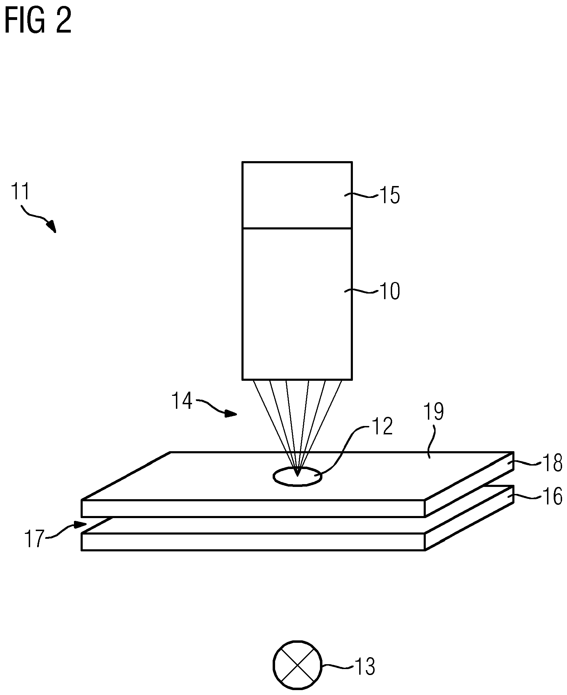

Der in FIG 2 gezeigte automatische Analyzer (11) umfasst Mittel zur automatischen Ausführung des in FIG 1 erläuterten Verfahrens. Die Mittel zur automatischen Ausführung des Verfahrens umfassen eine Steuereinrichtung, die so konfiguriert ist, dass sie eine automatische Ausführung des Verfahrens steuern kann.

Der Analyzer (11) ist ausgestaltet zum Analysieren von Blutzellen (12) in einer Probe und umfasst ein optisches Mikroskop (10) umfassend eine Lichtquelle (13) zum Beleuchten einer Probe und eine Sammellinse zum Sammeln und Fokussieren von Lichtstrahlen (14), die von der beleuchteten Probe ausgehen, eine mit dem Mikroskop (10) verbundene Kamera (15), einen automatischen Pipettor zum pipettieren von Flüssigkeiten sowie einen automatischen Transferarm zum transportieren des Dünnfilmmaterials. Bei der Probe handelt es sich um eine Blutprobe, die Blutzellen (12) enthält.

Zunächst wird auf das Trägerglas (16) mittels des Pipettors Wasser pipettiert, so dass sich ein Flüssigkeitsfilm (17) auf dem Trägerglas (16) ausbildet. Dann wird ein Dünnfilmmaterial (18) in Form einer flexiblen Folie mittels des Transferarms auf den Flüssigkeitsfilm (17) aufgebracht. Weiter wird mittels des Pipettors oder einer anderen geeigneten automatischen Vorrichtung die Probe mit Blutzellen (12) auf die hydrophile Oberfläche (19) des Dünnfilmmaterials (18) aufgebracht. Die hydrophile Oberfläche (19) des Dünnfilmmaterials (18) befindet sich dabei auf der Seite des Dünnfilmmaterials (18), welche dem Flüssigkeitsfilm (17) abgewandt ist.

Zur mikroskopischen Abbildung der Probe befindet sich diese somit nach Ausführung des Verfahrens auf der hydrophoben Oberfläche (19) des Dünnfilmmaterials (18). Das Dünnfilmmaterial (18) ist mittels des Flüssigkeitsfilms (17) aus Wasser auf dem Trägerglas (16) fixiert. Das Dünnfilmmaterial ist dadurch parallel zur planen Oberfläche des Trägerglases (16) ausgerichtet.

Nach Durchführung der Mikroskopie der Probe (4) wird mit einer automatischen Vorrichtung zum Abheben des Dünnfilmmaterials (18) das Dünnfilmmaterial (18) vom Trägerglas (16) abgehoben und das Dünnfilmmaterial (18) entfernt (5).

Weiter wird das Trägerglas (16) mittels einer automatischen Vorrichtung zum Reinigen und Trocknen des Trägerglases (18) gereinigt und getrocknet (6).

Das Dünnfilmmaterial (18) und/oder das Trägerglas (16) wird optional jeweils in ein Magazin zu Lagerung von Dünnfilmmaterial (18) beziehungsweise von Trägergläsern (16) automatisch verbracht.

Optional erfolgt mittels einer automatischen Vorrichtung zur Markierung und/oder Kennzeichnung der Trägergläser (16) eine Markierung und/oder Kennzeichnung der Trägergläser (16). Bevorzugt handelt es sich bei der Markierung beziehungsweise Kennzeichnung um eine jeweils eineindeutige Kennzeichnung beziehungsweise Markierung.

Optional erfolgt mittels einer automatischen Vorrichtung zur Erkennung und/oder Wiedererkennung defekter Trägergläser (16) eine Erkennung beziehungsweise Wiedererkennung von defekten Trägergläsern (16), die dann z.B. automatisch aussortiert und/oder in einen Abfallbehälter verbracht werden.

### Bezugszeichenliste

- 1: Aufbringen Flüssigkeitsmenge
- 2: Aufbringen Dünnfilmmaterial
- 3: Aufbringen Probe
- 4: Mikroskopie Probe
- 5: Entfernen Dünnfilmmaterial
- 6: Reinigung und Trocknung
- 7: Wiederverwendung Trägerglas
- 10: Mikroskop
- 11: Analyzer
- 12: Blutzelle
- 13: Lichtquelle
- 14: Lichtstrahlen
- 15: Kamera
- 16: Trägerglas
- 17: Flüssigkeitsfilm
- 18: Dünnfilmmaterial
- 19: hydrophile Oberfläche

## Patentansprüche

1. Verfahren zur Fixierung eines Dünnfilmmaterials (18) auf einer planen Oberfläche eines Trägerglases (16) für eine Mikroskopiervorrichtung mittels einer Flüssigkeit, das Verfahren umfassend die folgenden Schritte:
- Aufbringen einer Menge der Flüssigkeit auf die plane Oberfläche des Trägerglases (16),
- Aufbringen des Dünnfilmmaterials (18) auf die wenigstens teilweise, bevorzugt vollständig mit Flüssigkeit benetzte Oberfläche des Trägerglases (16),
- Aufbringen einer mikroskopisch zu untersuchenden Probe auf die der mit Flüssigkeit benetzten Oberfläche des Trägerglases abgewandten Oberfläche des Dünnfilmmaterials (18), **dadurch gekennzeichnet, dass** die der mit Flüssigkeit benetzten Oberfläche des Trägerglases (16) abgewandte Oberfläche (19) des Dünnfilmmaterials (18) hydrophil ist und wobei die Flüssigkeit aus Wasser besteht.

2. Verfahren nach Anspruch 1, das Verfahren weiter aufweisend den folgenden Schritt:
- Mikroskopie der auf der Oberfläche des Dünnfilmmaterials (18) aufgebrachten Probe.

3. Verfahren nach einem der vorhergehenden Ansprüche, das Verfahren weiter aufweisend den folgenden Schritt:
- Entfernen des Dünnfilmmaterials (18) mit der aufgebrachten Probe von dem Trägerglas (16),
- Reinigung und Trocknung der mit Flüssigkeit benetzten Oberfläche des Trägerglases (16),
- Wiederverwendung des Trägerglases (16).

4. Verfahren nach einem der vorhergehenden Ansprüche, wobei die Gesamtdicke des Trägerglases (16) mit aufgebrachter Flüssigkeit, Dünnfilmmaterial (18) und Probe weniger als 1.4 mm beträgt, wobei die Gesamtdicke des Trägerglases (16) mit aufgebrachter Flüssigkeit und Dünnfilmmaterial (18) ohne Probe besonders bevorzugt 1 mm beträgt.

5. Verfahren nach einem der vorhergehenden Ansprüche, wobei das Dünnfilmmaterial (18) eine biegsame Folie ist.

6. Verfahren nach einem der vorhergehenden Ansprüche, wobei die auf die plane Oberfläche des Trägerglases (16) aufgebrachte Menge der Flüssigkeit 3.7 bis 11 Nano Liter pro mm² beträgt, bevorzugt 4.8 bis 9.6 Nano Liter pro mm², besonders bevorzugt 5.3 Nano Liter pro mm².

7. Verfahren nach einem der vorhergehenden Ansprüche, wobei das Trägerglas (16) im sichtbaren Spektralbereich transparent ist.

8. Verfahren nach einem der vorhergehenden Ansprüche, wobei das Trägerglas (16) aus Kunststoff besteht.

9. Verfahren nach einem der vorhergehenden Ansprüche, wobei das Dünnfilmmaterial (18) mit einem zweiten Dünnfilmmaterial abgedeckt wird, so dass das zweite Dünnfilmmaterial als Deckglas der Probe dient, und wobei die Dicke des zweiten Dünnfilmmaterials bevorzugt 0.1 bis 0.17 mm beträgt.

10. Verfahren nach einem der vorhergehenden Ansprüche, wobei die Probe eine menschliche und/oder tierische Körperflüssigkeit, bevorzugt Blut, umfasst.

11. Verwendung eines Verfahrens nach einem der Ansprüche 1 bis 10 in einer Mikroskopiervorrichtung.

12. Verwendung eines Verfahrens nach einem der Ansprüche 1 bis 10 in einem automatischen Analyzer (11), wobei der Analyzer bevorzugt eine Mikroskopiervorrichtung umfasst.

13. Automatischer Analyzer (11) umfassend einen automatischen Pipettor zum Pipettieren von Flüssigkeiten; einen automatischen Transferarm zum Transportieren eines Dünnfilmmaterials (18); das Dünnfilmmaterial, wobei eine Oberfläche (19) des Dünnfilmmaterials hydrophil ist; eine Flüssigkeit, wobei die Flüssigkeit aus Wasser besteht; eine Steuereinrichtung, die so konfiguriert ist, dass sie eine automatische Ausführung eines Verfahrens zur Fixierung eines Dünnfilmmaterials auf einer planen Oberfläche eines Trägerglases (16) für eine Mikroskopiervorrichtung mittels der Flüssigkeit steuert, das Verfahren umfassend
- Aufbringen einer Menge der Flüssigkeit auf die plane Oberfläche des Trägerglases mittels des automatischen Pipettors,
- Aufbringen des Dünnfilmmaterials auf die wenigstens teilweise, bevorzugt vollständig mit Flüssigkeit benetzte Oberfläche des Trägerglases mittels des automatischen Transferarms, wobei die der mit Flüssigkeit benetzten Oberfläche des Trägerglases abgewandte Oberfläche des Dünnfilmmaterials hydrophil ist,
- Aufbringen einer mikroskopisch zu untersuchenden Probe auf die der mit Flüssigkeit benetzte Oberfläche des Trägerglases abgewandten Oberfläche des Dünnfilmmaterials mittels des automatischen Pipettors oder einer anderen geeigneten automatischen Vorrichtung, in welchem Fall der automatische Analyzer die automatische Vorrichtung umfasst.

## Claims

1. Method for fixing a thin-film material (18) on a planar surface of a slide (16) for a microscopy apparatus by means of a liquid, the method comprising the following steps:
- applying a quantity of the liquid to the planar surface of the slide (16),
- applying the thin-film material (18) to the surface of the slide (16) which has been wetted at least in part, preferably in full, with liquid,
- applying a specimen to be examined by microscopy to the surface of the thin-film material (18) facing away from the surface of the slide wetted with liquid,
**characterized in that**
the surface (19) of the thin-film material (18) facing away from the surface of the slide (16) wetted with liquid is hydrophilic and the liquid consists of water.

2. Method according to Claim 1, the method further including the following step:
- using microscopy to examine the specimen applied to the surface of the thin-film material (18).

3. Method according to either of the preceding claims, the method further including the following steps:
- removing the thin-film material (18) with the applied specimen from the slide (16),
- cleaning and drying the surface of the slide (16) that was wetted with liquid,
- reusing the slide (16).

4. Method according to any one of the preceding claims, wherein the overall thickness of the slide (16) with applied liquid, thin-film material (18) and specimen is less than 1.4 mm, wherein the overall thickness of the slide (16) with applied liquid and thin-film material (18) but without specimen is particularly preferably 1 mm.

5. Method according to any one of the preceding claims, wherein the thin-film material (18) is a pliable sheet.

6. Method according to any one of the preceding claims, wherein the amount of the liquid applied to the planar surface of the slide (16) is 3.7 to 11 nanolitres per mm², preferably 4.8 to 9.6 nanolitres per mm², particularly preferably 5.3 nanolitres per mm².

7. Method according to any one of the preceding claims, wherein the slide (16) is transparent in the visible spectral range.

8. Method according to any one of the preceding claims, wherein the slide (16) consists of plastics.

9. Method according to any one of the preceding claims, wherein the thin-film material (18) is covered by a second thin-film material such that the second thin-film material serves as a coverslip for the specimen and wherein the thickness of the second thin-film material preferably is 0.1 to 0.17 mm.

10. Method according to any one of the preceding claims, wherein the specimen comprises a human and/or animal bodily fluid, preferably blood.

11. Use of a method according to any one of Claims 1 to 10 in a microscopy apparatus.

12. Use of a method according to any one of Claims 1 to 10 in an automated analyser (11), the analyser preferably comprising a microscopy apparatus.

13. Automated analyser (11) comprising
an automated pipettor for pipetting liquids;
an automated transfer arm for transporting a thin-film material (18) ;
the thin-film material, with one surface (19) of the thin-film material being hydrophilic;
a liquid, the liquid consisting of water;
a control device which is configured to control an automated implementation of a method for fixing a thin-film material on a planar surface of a slide (16) for a microscopy apparatus by means of the liquid, the method comprising
- an application of a quantity of the liquid to the planar surface of the slide by means of the automated pipettor,
- an application of the thin-film material to the surface of the slide which is at least partly wetted, preferably completely wetted with liquid, the application being performed by means of the automated transfer arm, with the surface of the thin-film material facing away from the surface of the slide wetted with liquid being hydrophilic,
- the application of a specimen to be examined by microscopy on the surface of the thin-film material facing away from the surface of the slide wetted with liquid, the application being performed by means of the automated pipettor or any other suitable automated apparatus, in the case of which the automated analyser comprises the automated apparatus.

## Revendications

1. Procédé d'immobilisation d'un matériau (18) en couche mince sur une surface plane d'une lame (16) porte-objet d'une installation de microscopie au moyen d'un liquide, le procédé comprenant les stades suivants :
- on dépose une quantité de liquide sur la surface plane de lame (16) porte-objet,
- on dépose le matériau (18) en couche mince sur la surface, mouillée, au moins en partie, de préférence entièrement, du liquide, de la lame (16) porte-objet,
- on dépose un échantillon à examiner microscopiquement sur la surface, loin de la surface, mouillée du liquide de la lame porte-objet, du matériau (18) en couche mince, **caractérisé en ce que**
la surface (19), loin de la surface mouillée du liquide de la lame (16) porte-objet, du matériau (18) en couche mince est hydrophile, et dans lequel le liquide est de l'eau.

2. Procédé suivant la revendication 1, le procédé ayant en outre le stade suivant :
- microscopie de l'échantillon déposé sur la surface du matériau (18) en couche mince.

3. Procédé suivant l'une des revendications précédentes, le procédé ayant en outre le stade suivant :
- enlèvement du matériau (18) en couche mince avec l'échantillon déposé de la lame (16) porte-objet,
- nettoyage et séchage de la surface, mouillée du liquide, de la lame (16) porte-objet,
- réutilisation de la lame (16) porte-objet.

4. Procédé suivant l'une des revendications précédentes, dans lequel l'épaisseur totale de la lame (16) porte-objet avec du liquide déposé, du matériau (18) en couche mince et de l'échantillon est plus petite que 1,4 mm, l'épaisseur totale de la lame (16) porte-objet avec du liquide déposé et du matériau (18) en couche mince sans échantillon étant d'une manière particulièrement préférée de 1 mm.

5. Procédé suivant l'une des revendications précédentes, dans lequel le matériau (18) en couche mince est une feuille souple.

6. Procédé suivant l'une des revendications précédentes, dans lequel la quantité de liquide déposé sur la surface plane de la lame (16) porte-objet va de 3,7 à 11 nanolitres par mm², en allant de préférence de 4,8 à 9,6 nanolitres par mm², et étant d'une manière particulièrement préférée de 5,3 nanolitres par mm².

7. Procédé suivant l'une des revendications précédentes, dans lequel la lame (16) porte-objet est transparente dans le domaine spectral visible.

8. Procédé suivant l'une des revendications précédentes, dans lequel la lame (16) porte-objet est en matière plastique.

9. Procédé suivant l'une des revendications précédentes, dans lequel on revêt le matériau (18) en couche mince d'un deuxième matériau en couche mince, de manière à ce que le deuxième matériau en couche mince serve de lamelle couvreobjet, et dans lequel l'épaisseur du deuxième matériau en couche mince va de préférence de 0,1 à 0,17 mm.

10. Procédé suivant l'une des revendications précédentes, dans lequel l'échantillon comprend un liquide corporel humain et/ou animal, de préférence du sang.

11. Utilisation d'un procédé suivant l'une des revendications 1 à 10, dans une installation de microscopie.

12. Utilisation d'un procédé suivant l'une des revendications 1 à 10, dans un analyseur (11) automatique, l'analyseur comprenant de préférence une installation de microscopie.

13. Analyseur (11) automatique comprenant
une pipette automatique pour le pipetage de liquides ;
un bras de transfert automatique pour le transport d'un matériau (18) en couche mince ;
le matériau en couche mince, une surface (19) du matériau en couche mince étant hydrophile ;
un liquide, le liquide étant de l'eau ;
un dispositif de commande, qui est configuré de manière à commander une exécution automatique d'un procédé d'immobilisation d'un matériau en couche mince sur une surface plane d'une lame (16) porte-objet d'une installation de microscopie, au moyen du liquide, le procédé comprenant
- dépôt d'une quantité du liquide sur la surface plane de la lame porte-objet, au moyen de la pipette automatique,
- dépôt du matériau en couche mince sur la surface, mouillée au moins en partie, de préférence complètement, du liquide, de la lame porte-objet, au moyen du bras de transfert automatique, la surface, loin de la surface mouillée de liquide de la lame porte-objet, du matériau en couche mince étant hydrophile,
- dépôt d'un échantillon à examiner microscopiquement sur la surface, loin de la surface mouillée du liquide de la lame porte-objet, du matériau en couche mince, au moyen de la pipette automatique ou d'une autre installation automatique appropriée, dans le cas où l'analyseur automatique comprend l'installation automatique.
